# EUROPEAN PATENT SPECIFICATION

(11) **EP 0 653 291 B1**
(45) Date of publication and mention of the grant of the patent: **14.11.2001**
(21) Application number: 94307337.9
(22) Date of filing: 06.10.1994
(51) Int. Cl.: B29C 70/66, A63B 53/04

(54) **Moulded products**
Geformte Gegenstände
Articles moulés

(30) Priority: 14.10.1993 GB 9321259
(43) Date of publication of application: 17.05.1995
(73) Proprietor: Vantico AG, 4057 Basel (CH)
(72) Inventor: Wombwell, Paul Terrence, Royston, Herts, SG8 6DB (GB); Willis, Philip David, Bishop's Stortford, Herts, CM23 2TA (GB); Hayes, Barrie James, Cambridge (GB)

(56) References cited:
- DE-A- 2 212 038
- GB-A- 2 154 454
- US-A- 2 850 752
- US-A- 4 032 143
- US-A- 4 328 967
- US-A- 4 705 273
- US-A- 5 007 643
- US-A- 5 104 126
- US-A- 5 123 659

## Description

This invention relates to a process for making sports goods or integral parts of sports goods moulded from an epoxy resin composition.

In particular it relates to a process for making sports goods or parts thereof which, when compared to conventional goods, may have a larger volume size for a given weight or a lighter weight for a given volume size or which, within volume or weight constraints, can have different densities in required locations to give better performance and to the manufacture of such items.

US-A 4,328,967 discloses a method of making a bowling ball having an inner core and at least one thermosetting resin shell which contains sufficient lightweight particles to reduce the weight by volume of the shell by at least 5% below that a of a similar shell without said lightweight particles while providing the necessary resilience, hardness, and long term resistance to inertial shock characterisitics of the resulting bowling ball.

US-A 5,007,463 discloses a golf club head composed of an outer shell made of a fiber-reinforced resin and a core made of a syntactic foam and formed in the outer shell, wherein the synthetic foam comprises a matrix resin with glass microballoons as a main component and whiskers mixed therein to improve the impact fracture strength of the core.

US-A 4,032,143 discloses a composite molded baseball bat to provide the same striking action as a wooden baseball bat comprising a tubular, high yield strength aluminium core while the body is constituted by a polyurethane foam.

US-A 4,705,273 discloses a cushioned baseball bat preferably used with lighter and softer balls by providing lower surface hardness and a greater compressibilty than convential baseball bats. The baseball bats comprises a semi-rigit support structure, preferably constructed of wood, and a deformable, resilient cushion protion constituted by a polyurethane foam.

The epoxy compositions contain at least one resin at least one hardener and at least one filler of a specific gravity (SG) of less than 1 to enable the weight, size or density distributions to be achieved.

The composition is designed for rapid economic production utilising the Automatic Pressure Gelation technique which itself enables the accurate manufacture of complex shapes and also readily allows the incorporation of a wide range of inserts or spaces for inserts as may be required as part of the end product.

Accordingly the present invention provides a process for making sports implement as defined in claim 1.

The filler with an SG below 1, preferably below 0.7 may be hollow microspheres made of glass or plastics. Examples of suitable fillers are Eccospheres (Grace) which have an SG from 0.24 to 0.65, Scotchlite glass bubbles (3M) which have an SG from 0.1 to 0.5, Expancel thermoplastic microspheres (Nobel Industries) which have an SG of about 0.03, and Q-cel hollow microspheres (Akzo) which have an SG from 0.1 to 0.5.

Care should be taken to ensure that the hollow microspheres can withstand the processing conditions which occur during the production/moulding of the implement. For instance, if

the moulding is carried out at high temperatures, the substance forming the microspheres should not melt at the temperatures used.

The epoxide resin may be a cycloaliphatic epoxide resin, i.e. a resin which has at least one epoxide group in which the oxygen atom is attached to carbon atoms in a cycloaliphatic ring, a N-glycidylamine, a polyglycidyl ester of a polycarboxylic acid or a polyglycidyl ether of a polyhydric alcohol or phenol. The curing agent for the epoxide resin may be a cycloaliphatic or aromatic polyamine, a polyhydric phenol, a polycarboxylic acid anhydride, a polyalkylene polyamine, a polyamino amide, a polythiol, or a catalytic curing agent such as a boron trifluoride-amine complex or an imidazole. Preferred resin compositions include those comprising at least one polyglycidyl ether of a polyhydric phenol such as 2,2-bis(4-hydroxyphenyl)propane (bisphenol A), bis(4-hydroxyphenyl)methane (bisphenol F), a phenol formaldehyde novolac or a cresol-formaldehyde novolak, together with an amine curing agent. Most preferably the resin is mainly or wholly based on Bisphenol A or Bisphenol F.

Epoxide resin compositions used in the method of the invention may also include an accelerator for the cure of the resin with the chosen curing agent. Accelerators suitable for the cure of an epoxide resin with a particular curing agent are well known to those skilled in the art of curing epoxide resins.

The epoxy resin compositions may contain as well as the resin and hardener components various modifiers such as high density fillers, fibrous materials like glass, carbon or aramid fibres, needle-shaped fillers such as wollasonite for reinforcement, pigments, dyes and toughening materials such as reactive rubbers and so called core-shell polymers in addition to the lightweight fillers. These can be used to modify the properties, appearance and processing characteristics as desired.

The fillers may be used in such relative amounts as will produce a product having an SG of from 0.8 to 2.0, preferably from 0.8 to 1.2.

The sports goods or parts thereof may be made by what is called the Automatic Pressure Gelation technique (APG). In this process which is described for example in GB 1323343 and EP 0333456 an epoxy resin and curing agent are mixed at a temperature at which they are liquid. This mixture is then passed into a mould, which may already contain located inserts, under slight pressure. The mould is heated to a temperature such that contact with the wall causes the epoxy/hardener reaction to speed up and give a suitable demould time without any exothermic damage to the resin system.

In order to produce a sports implement such as a golf club head, a pre heated liquid casting resin composition, which is capable of setting within a period of one to sixty minutes at the mould temperature, is held in a pressure pot and injected into the mould by application of pressure so as to fill the mould, the temperature of the resin composition being at least 5 deg C below the temperature of the mould entry point and the temperature profile of the mould ideally being such as to ensure progressive gelation of the resin composition from the walls of the mould to the entry point, thereby ensuring that cure shrinkage is continuously compensated for by entry of fresh resin composition until all the resin composition is fully gelled, whereafter the set moulding is removed from the mould.

Accordingly the present invention provides a process for making a criket bat, baseball bat or a golf club head which cpmprises introducing a curable epoxy resin composition to a mould which is at a temperature high enough to give a suitable fast demoulding time and during the reaction process to supply further resin under pressure to compensate for skrinkage of the composition until the gelation point has been reached and completed for the whole moulding, wherein the curable epoxy resin composition contains at least on filler having an SG belowI and the resulting inplement or part thereof has an SG of from 0.8 to 2.0.

Depending on the actual epoxy resin and curing agent used, the mould may be at a temperature of 30°C to 190°C, depending on the reactivity of the system.

As mentioned above, it is possible to cast the article around previously located inserts.

These inserts can be made of a variety of materials such as metals, composites, thermoplastics or rubbers for example. Their use may be to improve fixing and attachment, mechanical properties such as impact, cracking or wear resistance, to give decorative effects or to improve the so called 'sweet spots' where better ball hitting properties are achieved as in cricket and baseball bats or golf club heads. Alternatively these articles may be moulded with cavities for subsequent fitting of inserts, the types of which are listed above, to achieve the same effects. Such post fitted inserts can be bonded or mechanically fixed as required. An additional possibility with 'post fitted' inserts is that the inserts can be made by casting or filling 'in-situ' liquid thermosetting pastes, foams or casting compounds or those materials which could be damaged during the original moulding process.

When making sports goods or parts thereof by the APG process the inserts which can be incorporated into the casting include abrasion and wear resistant plates, sleeves and attachment points for assisting in the location and assembly of final finished items and a variety of items including the foregoing which act as reinforcement, load spreaders, crack or crack growth inhibitors etc. Any or all of these can be pre-treated by chemicals or abrasion or mechanically shaped to obtain good bonding or retention within the part.

Post applied inserts may be bonded or mechanically fixed or adhere in their own right if placed in position when liquid. Such is the accuracy potential of the moulding process by the Pressure Gelation method that even screw holes can be directly moulded into the part.

Thus this invention provides for rapid, efficient manufacture of sports goods or parts thereof which it is either difficult, very expensive or impossible to achieve by other techniques. For example a given golf club driver has by the rules of the sport to be of given weight. At present these are primarily manufactured from solid wood or hollow metal. If it is required to improve their effectiveness by making them larger this cannot be achieved with solid wood as the weight limit would be exceeded. With hollow metal drivers the wall thickness would need to be reduced to the point where it was easily damaged on impact or lacked the strength to give good performance. Producing a larger size driver head using the present invention is simple and economic and this represents a big advance in the art.

The invention is illustrated by reference to the accompanying drawings in which:-
Fig. 1 is a cross section showing a sleeve insert for the shaft in a golf club head;
Fig. 2 shows a golf club head with a moulded cavity therein, and
Fig. 3 shows a standard size baseball bat.

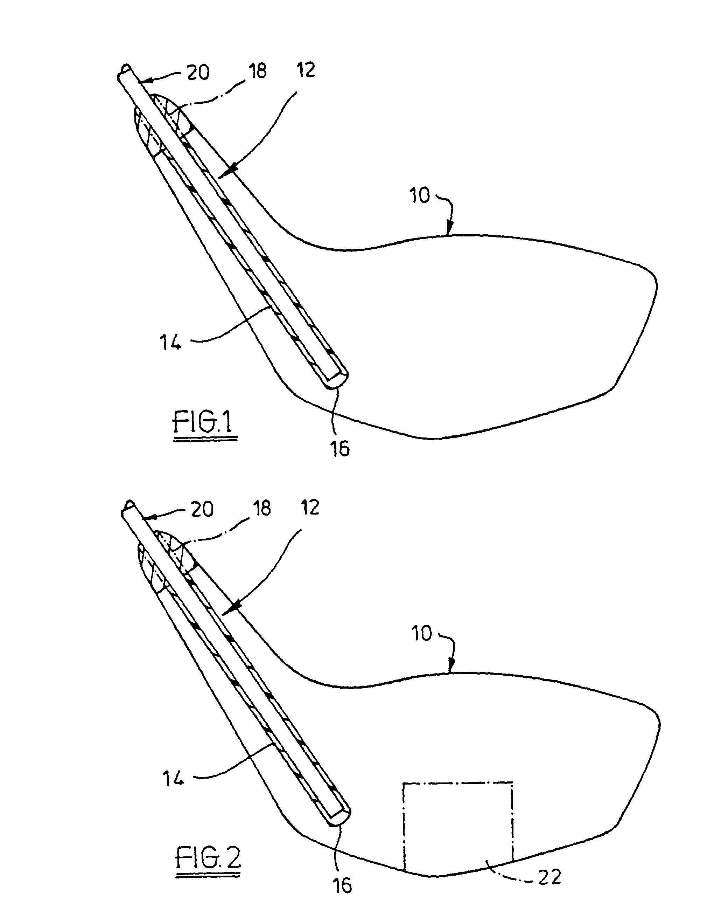

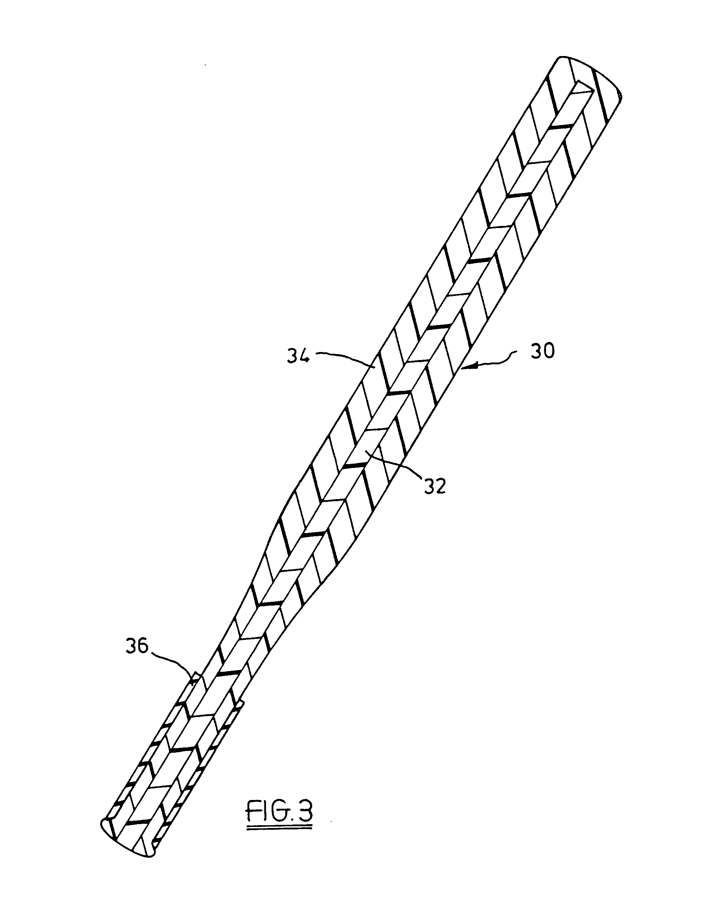

Referring to Figs. 1 and 2, golf club head 10 comprises an epoxy resin casting. Located within the neck 12 is sleeve 14 made of metal or plastics, which is cast into head 10. Sleeve 14 may have a rounded end 16 to help prevent any crack propagation. The upper end of sleeve 14 may be threaded or curled and bonded if necessary 18 to locate sleeve 14 correctly in the head 10 and to locate shaft 20. In Fig. 2 the position of a cavity is shown at 22, which may be filled with foam or blocks of solid materials. The cavity may be so positioned as to improve the performance of the head.

Referring to Fig. 3 baseball bat 30 has a centrally positioned cured rod 32 made of thermosetting resin and longitudinally reinforced with unidirectional glass fibre. It is located in the mould prior to resin injection.

Pre-primed rubber grip pad 36 is also placed in the mould before injection.

34 is an epoxy resin hardener composition containing thoroughly dispersed random glass reinforcement and low density filler injected into the mould at 25°C. The mould wall temperature is set at 50°C and the moulding removed after gelation, 15 minutes after injection.

The resulting baseball bat is lighter in weight than that of an equivalent wooden product but possesses excellent toughness and resiliency.

## Claims

1. A process for making a cricket bat, baseball bat or a golf club head which comprises introducing a curable epoxy resin composition to a mould which is at a temperature high enough to give a suitably fast demoulding time and during the reaction process to supply further resin under pressure to compensate for shrinkage of the composition until the gelation point has been reached and completed for the whole moulding, wherein the curable epoxy resin composition contains at least one filler having an SG below 1.0, and the resulting cricket bat, baseball bat or golf club head has an SG from 0.8 to 2.0.

2. A process according to claim 1 in which the filler having an SG below 1 has an SG below 0.7.

3. A process according to claim 1 in which the filler having an SG below 1 is selected from hollow microspheres made of glass or plastics.

4. A process according to claim 1 in which the curable epoxy resin composition also contains one or more of clays, silicas, chalk, mica powder, glass powder, short length glass, carbon or aramid fibres, aluminium hydroxide, magnesium hydroxide, wollastonite, calcined china clay, powdered thermoplastics and thermoset resin, dyes, pigments, coloured aggregates and various toughening agents.

5. A process according to claim 1 in which the cricket bat, baseball bat or golf club head has an SG of from 0.8 to 1.2.

6. A process according to claim 1 in which the moulding incorporates one or more inserts into the casting.

7. A process according to claim 1 in which the moulding incorporates a cavity into the moulded part.

## Patentansprüche

1. Verfahren zur Herstellung eines Kricketschlägers, eines Baseballschlägers, oder eines Golfschlägerkopfs, bei dem eine abbindungsfähige Epoxidharzzusammensetzung in eine Form geleitet wird, die sich auf einer Temperatur befindet, die hoch genug ist, um eine geeignete schnelle Entformungszeit bereitzustellen und während des Reaktionsprozesses zusätzliches Kunstharz unter Druck zuführen zu können, um das Schrumpfen der Zusammensetzung zu kompensieren, bis der Gelierungspunkt erreicht und für den gesamten Formling beendet ist, wobei die abbindungsfähige Epoxidharzzusammensetzung zumindest einen Füllstoff mit einer SG kleiner als 1,0 enthält und wobei der resultierende Krikketschläger, Baseballschläger oder Golfschlägerkopf eine SG von 0,8 bis 2,0 aufweist.

2. Verfahren nach Anspruch 1, wobei der Füllstoff, der eine SG kleiner als 1 aufweist, eine SG kleiner als 0,7 aufweist.

3. Verfahren nach Anspruch 1, wobei der Füllstoff, der eine SG kleiner als 1 aufweist, ausgewählt ist aus hohlen Mikrokügelchen, die aus Glas oder Kunststoff hergestellt sind.

4. Verfahren nach Anspruch 1, bei dem die abbindungsfähige Epoxidharzzusammensetzung außerdem eines oder mehrere der folgenden Materialien aufweist: Ton, Silica, Kreide, Glimmerpulver, Glaspulver, Glas kurzer Länge, Kohlenstoffoder Aramidfasern, Aluminiumhydroxid, Magnesiumhydroxid, Wollastonid, kalzinierten Chinaton, pulverisierte Thermokunststoffe und in Wärme abbindenden Kunststoff, Farbstoffe, Pigmente, gefärbte Zuschlagstoffe und verschiedene Festigkeitsvermittler.

5. Verfahren nach Anspruch 1, wobei der Kricketschläger, der Baseballschläger oder der Golfschlägerkopf eine SG von 0,8 bis 1,2 aufweist.

6. Verfahren nach Anspruch 1, wobei der Formling einen oder mehrere Einsätze zum Einführen in das Gussteil aufweist.

7. Verfahren nach Anspruch 1, wobei der Formling einen Hohlraum enthält, der sich in das geformte Teil hineinerstreckt.

## Revendications

1. Procédé pour fabriquer une batte de cricket, une batte de base-ball ou une tête de club de golf qui consiste à introduire une composition de résine époxy durcissable dans un moule qui est à une température assez élevée pour obtenir un temps de démoulage rapide de façon appropriée et pendant le procédé réactionnel, pour fournir une résine supplémentaire sous pression afin de compenser le retrait de la composition jusqu'à ce que le point de gélification ait été atteint et complété pour le moulage entier, dans lequel la composition de résine époxy durcissable contient au moins une charge ayant une densité inférieure à 1,0, et la batte de cricket, la batte de base-ball ou la tête de club de golf résultant possède une densité comprise entre 0,8 et 2,0.

2. Procédé selon la revendication 1, dans lequel la charge ayant une densité inférieure à 1 possède une densité inférieure à 0,7.

3. Procédé selon la revendication 1, dans lequel la charge ayant une densité inférieure à 1 est choisie parmi les microsphères creuses faites de verre ou de matière plastique.

4. Procédé selon la revendication 1, dans lequel la composition de résine époxy durcissable contient également un ou plusieurs d'argiles, de silices, de craie, de poudre de mica, de poudre de verre, de fibres de verre, de carbone ou d'aramide à courte longueur, d'hydroxyde d'aluminium, d'hydroxyde de magnésium, de wollastonite, de kaolin calciné, de matières thermoplastiques en poudre et d'une résine thermodurcissable, des colorants, des pigments, des agrégats colorés et divers agents solidifiants.

5. Procédé selon la revendication 1, dans lequel la batte de cricket, la batte de base-ball ou la tête de club de golf possède une densité comprise entre 0,8 et 1,2.

6. Procédé selon la revendication 1, dans lequel le moulage incorpore un ou plusieurs inserts dans la coulée.

7. Procédé selon la revendication 1, dans lequel le moulage incorpore une cavité dans la partie moulée.
